Europäisches Patentamt

European Patent Office

Office européen des brevets

(11) Publication number: **0 294 180 B1**

# EUROPEAN PATENT SPECIFICATION

(45) Date of publication of patent specification: **13.05.92**   (51) Int. Cl.⁵: **A22C 11/12**, A22C 13/02

(21) Application number: **88305008.0**

(22) Date of filing: **01.06.88**

(54) **Knot tying machine.**

(30) Priority: **02.06.87 GB 8712874**

(43) Date of publication of application:
**07.12.88 Bulletin 88/49**

(45) Publication of the grant of the patent:
**13.05.92 Bulletin 92/20**

(84) Designated Contracting States:
**AT BE CH DE ES FR GB GR IT LI LU NL SE**

(56) References cited:
| | |
|---|---|
| EP-A- 0 025 479 | EP-A- 0 041 006 |
| CH-A- 334 293 | CH-A- 343 253 |
| CH-A- 406 886 | DE-A- 1 507 973 |
| DE-A- 3 141 782 | DE-A- 3 339 457 |
| DE-A- 3 405 445 | DE-B- 1 187 512 |
| DE-B- 1 507 975 | FR-A- 685 898 |
| FR-A- 1 505 457 | FR-A- 2 253 461 |
| US-A- 2 760 226 | US-A- 3 162 893 |
| US-A- 4 411 048 | |

(73) Proprietor: **DEVRO, INC.**
**Loeser Avenue P.O. Box 858**
**Somerville New Jersey 08876(US)**

(72) Inventor: **Hanlon, Allan James**
**Rubislaw 127 Henderson Street**
**Bridge of Allen Stirling FK9 4RO(GB)**
Inventor: **David, Robert**
**8 Braemar Park**
**Dunblane(GB)**
Inventor: **Wakefield, Barry Roger**
**6 The Yetts**
**Cambusbarron Stirling FK7 9NJ(GB)**

(74) Representative: **Jones, Alan John et al**
**CARPMAELS & RANSFORD 43 Bloomsbury**
**Square**
**London, WC1A 2RA(GB)**

## Description

This invention relates to a machine for tying a knot in the end of a strand of material.

There are many instances where in a production of material it is necessary to tie a knot. This is usually done by hand and is a very time consuming operation. In one particular instance, the production of collagen casings for use in the food industries such as sausage making it is necessary to tie a single knot in the end of the casing so that when the casing is filled the filling material will not burst out of the end.

Collagen casings are produced in very long lengths which are shirred into a compact "stick" and one end is normally sealed. It is possible to seal the end by heat sealing and other methods, but a knot is the most satisfactory, particularly when dealing with sausages, where the meat contains a high proportion of water, or other liquid, and where the sausages are hung e.g. prior to being smoked. The water can sometimes dissolve a heat seal, whereas it cannot untie a knot!

An object of the present invention is to provide a machine for tying a knot in a strand of material such as a collagen sausage casing.

In accordance with one aspect the machine comprises gripper means for gripping the free end of a strand of material, such as a collagen casing, and for extending it and optionally twisting it, a support, such as a pair of jaws, shaped so that the extended strand can be wrapped thereabout, wrapping means for wrapping the strand round the support, and means for gripping the strand, cutting it, and pulling the tail of the strand through the wrapped-around portion so as to form a knot.

The means for wrapping the strand around the support may comprise a jaw carriage in the form of a ring, with a pair of wrap-around rollers on it. Alternatively, in place of the ring a bridge may be used with a pair of wrap-around rollers extending from it.

In a preferred arrangement the support is a split tube carried by an arm which is used (instead of the jaws) to wrap the strand around to form a loop. When using the split tube a "tucker and cutter" may be employed which goes inside the tube and performs the cutting and tucking operations.

In another alternative the ring carrying the wrap-around rollers can be replaces by an offset arm carrying the rollers, the offset arm being rotatable about the jaws.

In the accompanying drawings:-

Figures 1a to 1h illustrate diagrammatically a sequence of operations of tying a knot in a collagen casing in accordance with the present invention, the diagrams being in plan view;

Figures 2a to 2f correspond to Figures 1a to 1f but show the operations involved diagrammatically, but in elevation form as seen in the direction of the arrow X shown in Figure 1a;

Figure 3 is a plan view of part of a modified machine for carrying out the method of tying a knot in a collagen casing illustrated diagrammatically in Figures 1 and 2, a gripper pull-back and twist mechanism being shown in firm lines and a winder and pull through unit in dotted or phantom lines, the machine embodying the present invention;

Figure 4 is a plan view of the winder and pull through mechanism, shown in Figure 3 in phantom line;

Figure 5 is an end elevation of the mechanism shown in Figure 4;

Figure 6 is a scrap section showing the relationship of jaws and wrap around rollers,

Figures 7 and 8 show different positions, release and pick-up respectively, of the wrap around rollers;

Figure 9 shows, in plan, a pick-up and knot-running mechanism;

Figure 10 is an end elevation of the mechanism shown in Figure 9;

Figure 11 is a side elevation of knot retainer unit;

Figure 12 is a plan view of the unit shown in Figure 11;

Figure 13 is a further view of the same mechanism;

Figure 14 is an elevation of a clamp and cut unit;

Figures 15 and 16 are respectively left-hand and right-hand side elevations of the unit;

Figure 17 is a plan view showing various units of an alternative knot tying machine embodying the invention, mounted on a base plate, some of the units being shown out of their normal static positions for the sake of clarity;

Figure 18 is a plan view of a carriage unit carrying gripper jaws and a radius arm, which is part of the machine shown in Figure 17;

Figure 19 is a side elevation in the direction of the arrow X shown in Figure 18;

Figure 20 is a side elevation in the direction of the arrow Y shown in Figure 18;

Figure 21 is a front elevation of the unit shown in Figure 18;

Figure 22 is a plan view of an inserter and inserter carriage unit, shown in Figure 17;

Figure 23 is a side view of the inserter and inserter carriage unit;

Figure 24 is an end view of the same unit;

Figure 25 is a plan of the jaws and jaws carriage and casing tension unit;

Figure 26 is an elevation of the unit shown in Figure 25 seen in the direction of arrow X;

Figure 27 is an elevation of the unit shown in Figure 25 seen in the direction of arrow Y;

Figure 28 is a plan of a knot runner roller and its carriage unit;

Figure 29 is an elevation of the knot runner roller and its carriage unit seen in the direction of arrow X in Figure 28;

Figure 30 is an elevation of the knot runner roller and carriage unit seen in the direction of arrow Y in Figure 28;

Figure 31 is a plan of a clamp and clamp carriage and knife unit;

Figure 32 is an elevation of the unit shown in Figure 17 in the direction fo the arrow X in Figure 31;

Figure 33 is a side elevation of the unit shown in Figure 32;

Figure 34 is an elevation of the unit shown in Figure 17 seen in the direction of arrow Y in Figure 31;

Figures 35(a) to (i) inclusive shown in diagrammatic form various operations involved in the use of the machine illustrated in Figures 17 to 34;

Figure 36 is a diagram showing how the various parts of the mechanism operate in sequence so as to tie a knot in the end of the casing and run the knot back along the casing and then cut off the end of the casing and then insert the knotted end back inside the casing;

Figures 37a to 37g are diagrammatic plan views of an alterative machine embodying the invention;

Figures 38a to 38g are corresponding diagrammatic elevational views in direction of arrow X of the same machine that is shown in Figures 37a to 37g; and

Figure 39 is a perspective view of components of the machine shown in Figures 37 and 38.

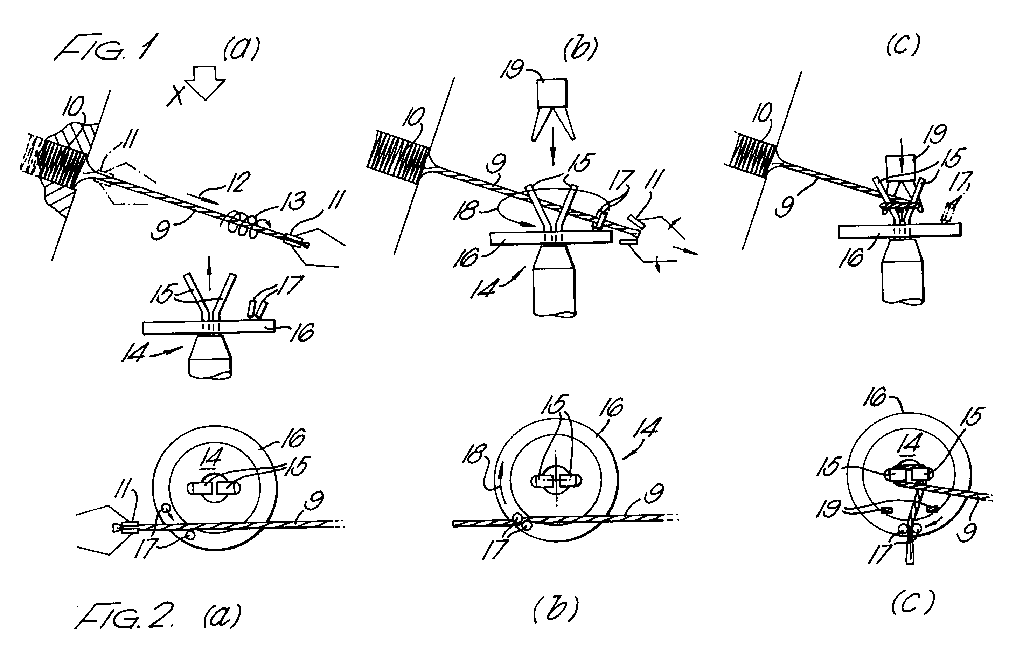

The sequence of operations necessary in accordance with the invention for tying knot in the end of a collagen casing will now be described with reference to the diagrammatic representations of Figures 1a to 1h and Figures 2a to 2f. Figures 1 and 2 illustrate the invention in principle but the details of the machine differ in some respects from the version illustrated in these Figures as will be set out in more detail later.

In Figure 1a a shirred collagen casing is shown at 10 as it might appear at the end of a shirring machine such as is described in our European Patent No. 0161055. The first operation that is necessary is to grip the exposed end of the collagen casing by means of a gripper 11 having a pair of jaws, pull out the collagen casing in the direction of arrow 12, and at the same time rotate the gripper 11 so as to twist the casing in the direction of the arrow 13. The gripper 11 is thus moved from the dotted line position shown in Figure 1a to the firm line position, extending and twisting the collagen casing to form a twisted strand 9.

A jaw carriage14 is located to one side of the extended and twisted strand of casing 9, and it will be noted that the strand 9 is set at an angle to the axial direction of jaws 15 and ring 16 forming part of a jaw carriage assembly 14. The jaw carriage ring 16 also carries a pair of wrap-around rollers 17, the positions of which can be varied so as to bring the rollers together or to separate them.

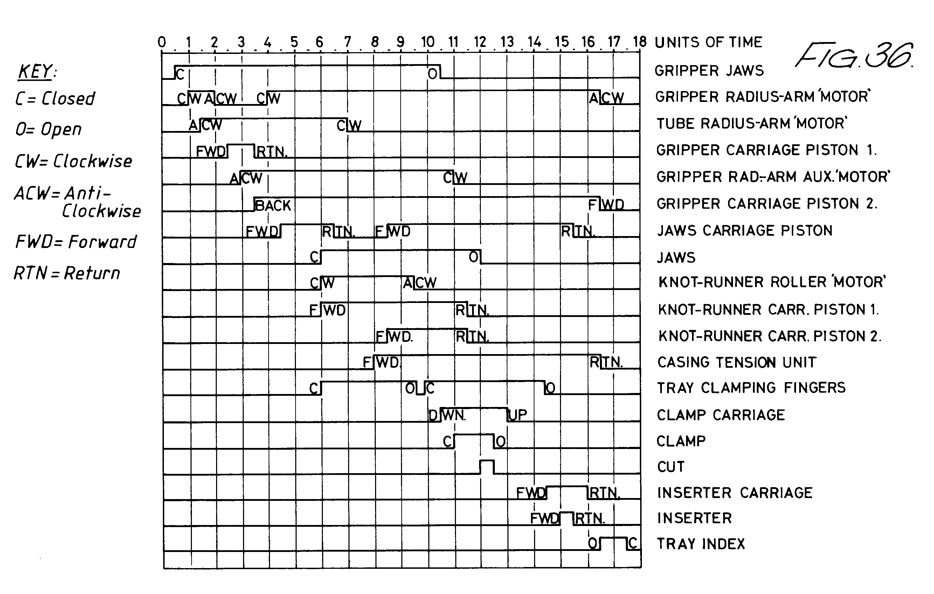

As shown in Figure 2a the rollers 17 are separated but, as shown in Figure 1b and 2b, the jaw carriage assembly 14 is brought forward towards the twisted extended collagen casing strand 9 and the wrap-around rollers 17 are closed so as to grip the twisted collagen casing. Clamping fingers at the tray exit now close to prevent more of the casing unshirring - in the same way as is described later with reference to Figures 17, 35d and 35e where the clamping fingers are shown as item 312. The ring 16 is then rotated in the direction of the arrow 18 in Figure 1b and 2b so that the twisted collagen casing is wrapped around jaws 15 about 300 degrees, so as to achieve the position shown in Figures 1c and 2c.

Because the twisted collagen casing is set at an angle to the axis of the jaws the strand of collagen casing passes itself on the side nearest the jaws as is clear from Figure 2c.

A tail gripper and cutter 19 is then brought into the position shown in Figures 1 and 2d, so as to grip the tail 9a of the twisted casing strand 9 and to cut off the unwanted portion 9b. The rollers 17 are then separated as shown in Figure 2d and the tail 9a of the casing, gripped by the gripper 19 is then raised to the position shown in Figure 1e and 2e. The tail gripper 19 is pulled axially away from the jaw carriage 14, it is then raised and then moved forward axially towards the jaw carriage 14 to the position shown in Figures 1f and 2f. The jaws 15 are then closed so as to grip the tail.

The tail gripper 19 can then be opened and removed as shown in Figure 1g and the ring 16 can be moved axially in a direction of arrow 20 to the position shown in dotted line so as to move the loop of the knot along the twisted collagen strand, thus completing the knot 20A as shown in Figure 1h.

The knot may then be moved along the strand until it is close to the shirred casing, the unwanted tail of the strand snipped off by the cutter combined with the tail gripper 19, and then the knotted end may be pushed inside the collagen casing and the casing removed.

The machine shown in Figures 3 to 16 incorporates all of the steps described with reference to the diagrammatic Figures 1 and 2 although the precise apparatus for carrying out the step differs slightly from that shown in the diagrammatic figures.

The machine shown in Figures 3 to 16 incorporates a number of important changes as compared with the one illustrated diagrammatically in Figures 1 and 2, the more important changes being:-

1. The ring 16 used to strip the loop is replaced by a pair of fingers which transfer the loop from the jaws into the knot-running roller.

2. The wrap around motion is achieved with rotary actuation and not rack and pinion.

3. An angular motion is provided for the jaw and gripper/knot run roller carriages. The motion firstly tightens the loop onto the roller and secondly does the knot running.

Comparing the features shown in Figure 1(a) with corresponding features shown in Figures 3 to 16, we have:-

The gripper 11 and jaws of Figure 1(a) are replaced by jaws 211 in Figures 3 and 4.

The jaws 16 of Figure 1(a) are replaced by jaws 215 in Figures 3, 4 and 6.

The wrap around rollers 17 are replaced by pairs of rollers 217 which are mounted on pivoted arms and movable around an arc rather than being mounted on a ring - see Figures 4, 7 and 8.

The tail gripper and cutter mechanism 19 is replaced by a pair of fingers 219 (Figure 9) forming part of a pick-up and knot run mechanism.

The machine also incorporates knot-running, tightening and insertion mechanisms which were not shown in Figures 1 and 2.

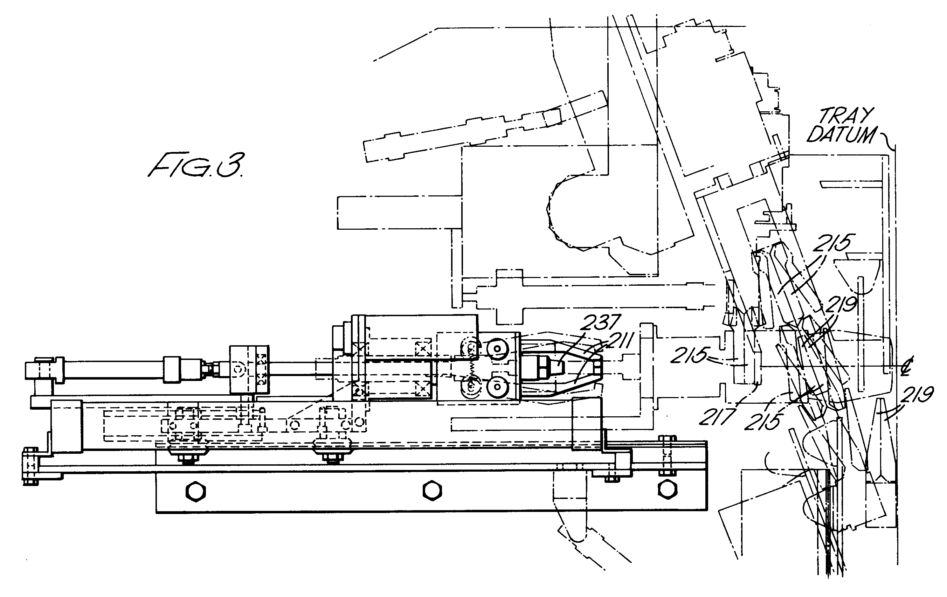

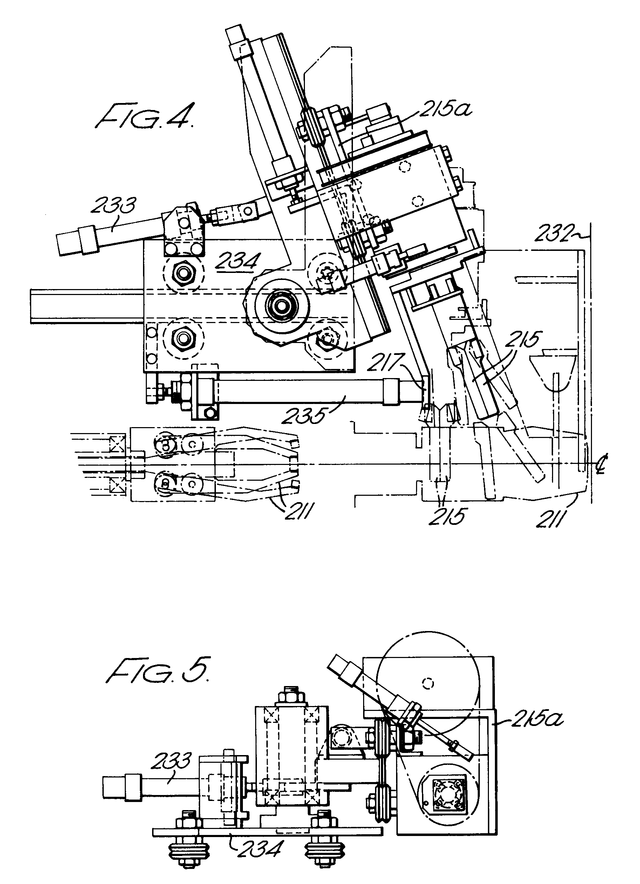

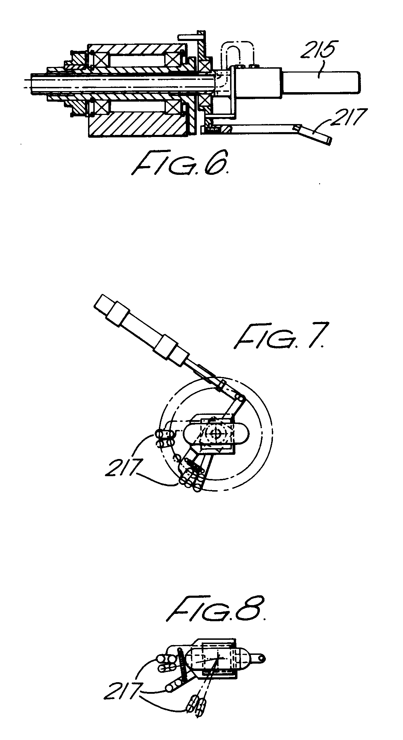

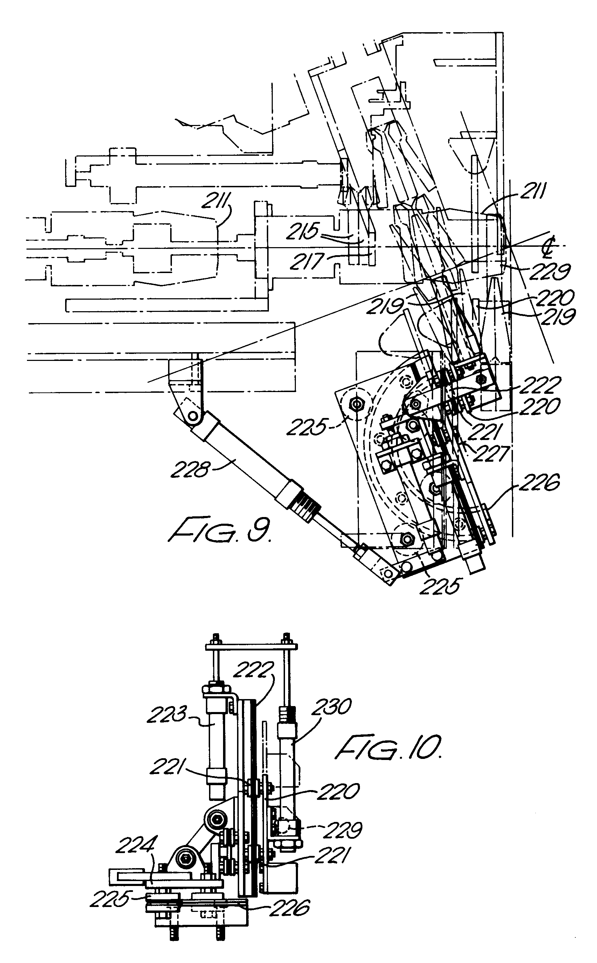

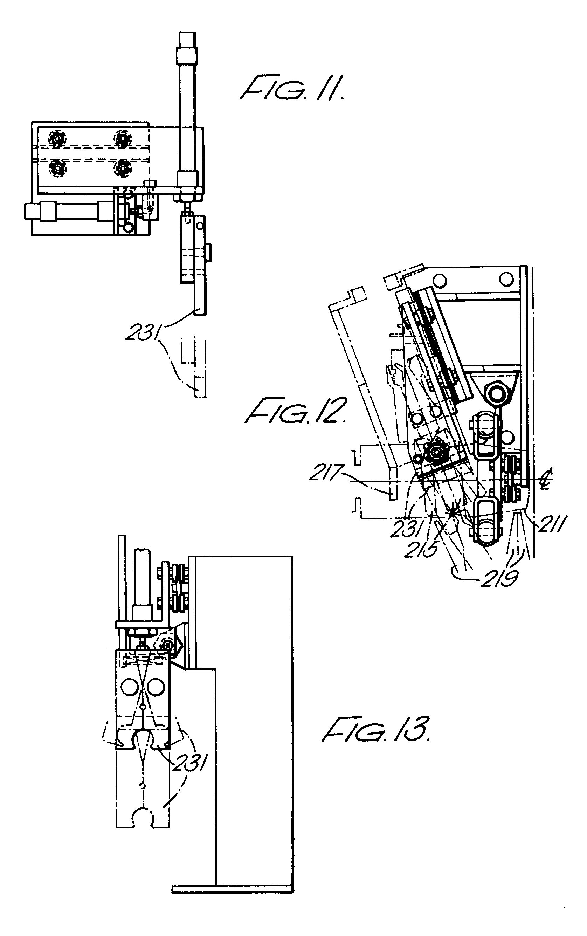

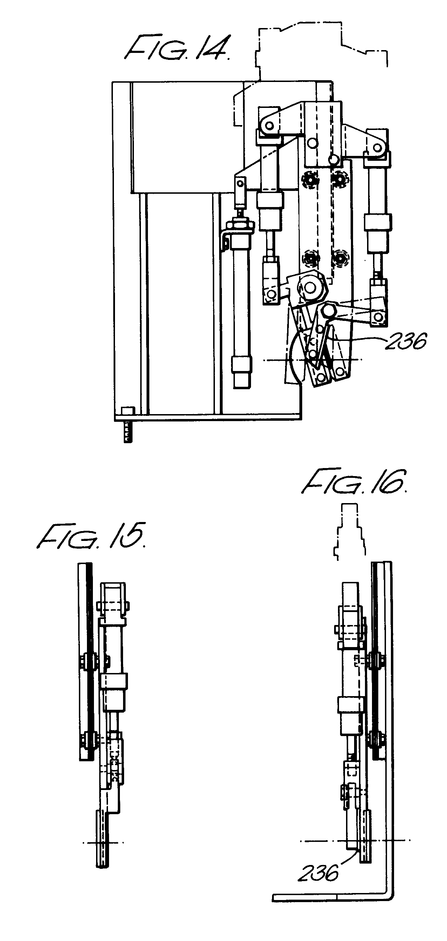

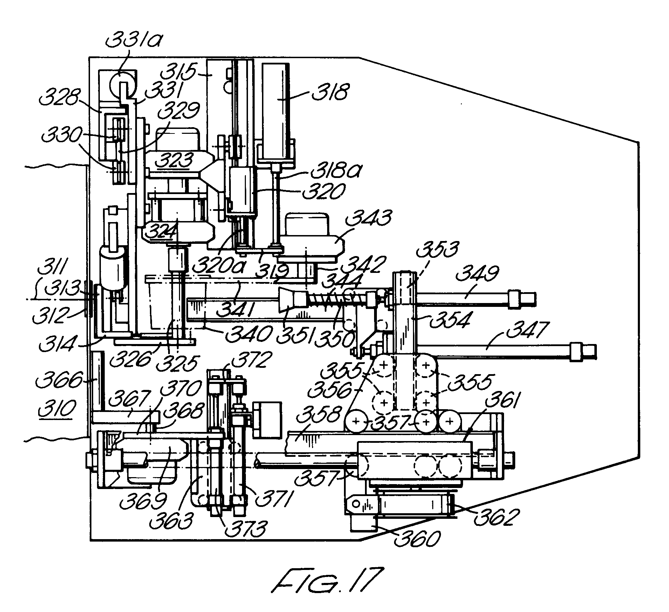

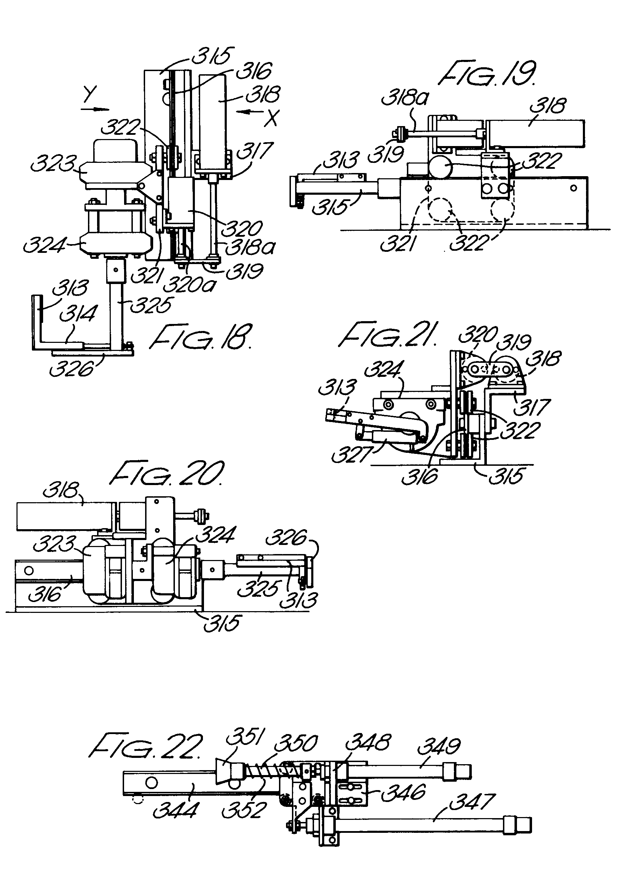

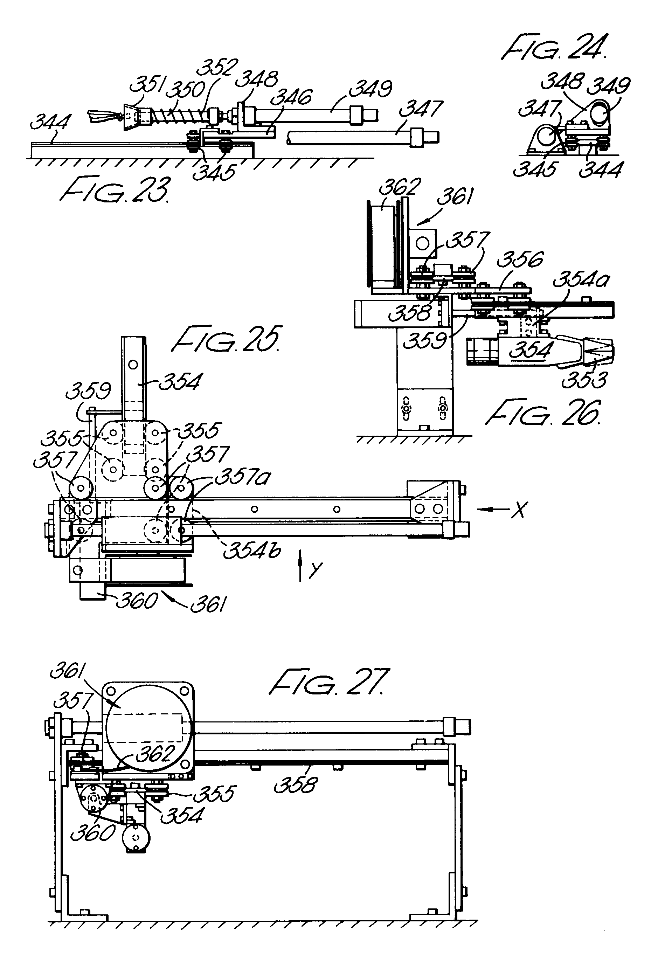

The tail gripper fingers 219 are mounted on a carriage 220 with rollers 221 running on a vertical rail 222 to give motion in the vertical plane operated by a pneumatic cylinder 223 (see Figure 10). The vertical rail 222 is mounted on a horizontal carriage 224 which is mounted on rollers 225 running on a curved rail 226 (see Figure 9), so that it can be pivoted about a point 227 by the pneumatic cylinder 228 shown in Figure 9.

Mounted on the same carriage as tail gripper fingers 219, but underneath them, is the knot running roller 229.

Having performed the action shown in 1f the fingers 219 retract and move up to allow the knot running roller 229 to be aligned with the closed jaws 215. Two piston and cylinder devices are shown in Figure 10; cylinder 223 for the vertical movement shown in Figures 2d to 23, the second piston and cylinder 230 is to position the roller 229 in line with the closed jaws.

The loop transfer fingers 231 shown in Figure 11 are lowered onto the closed jaws 215 and then move in direction of arrow 20 in Figure 1g to transfer the loop of the knot thus formed, onto the knot running roller 229.

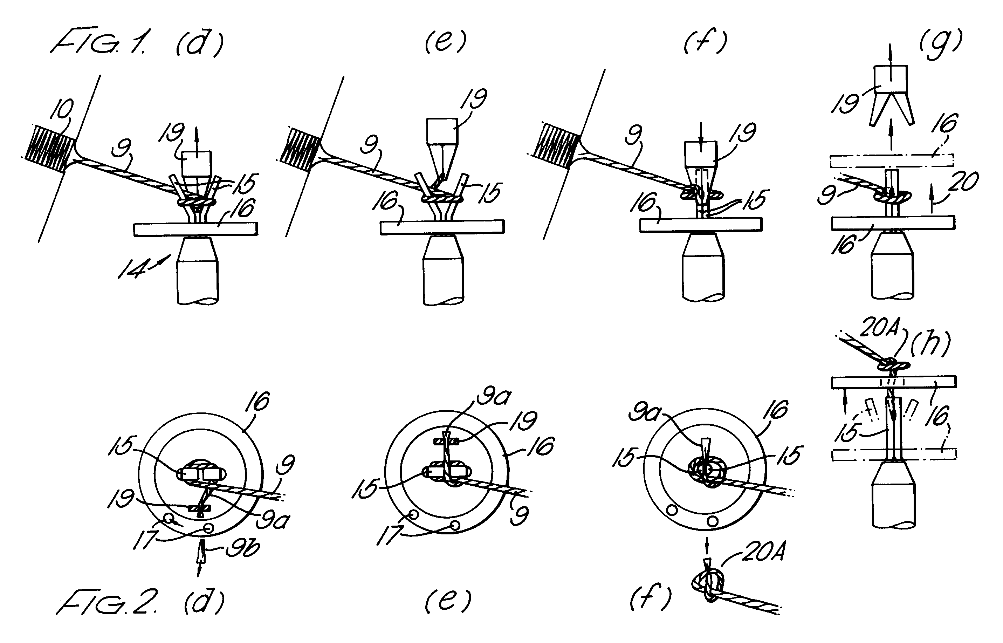

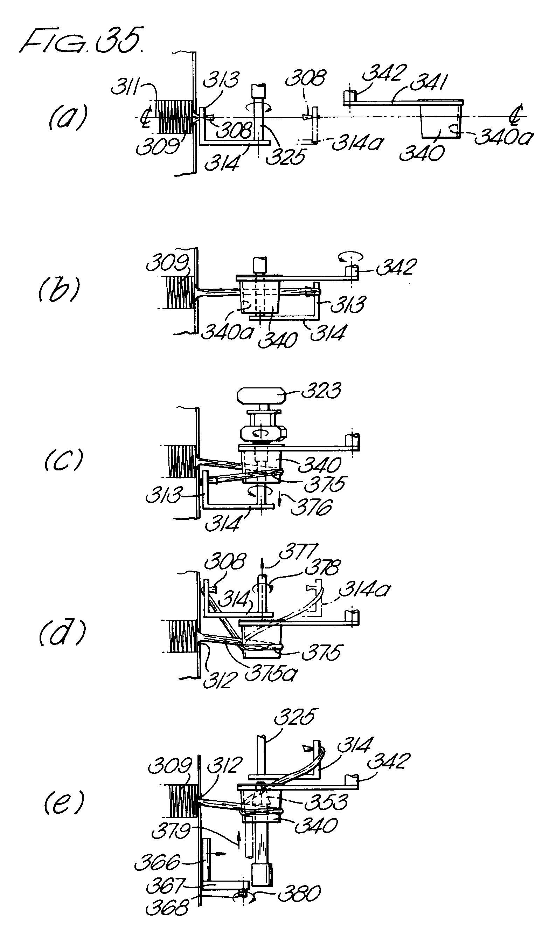

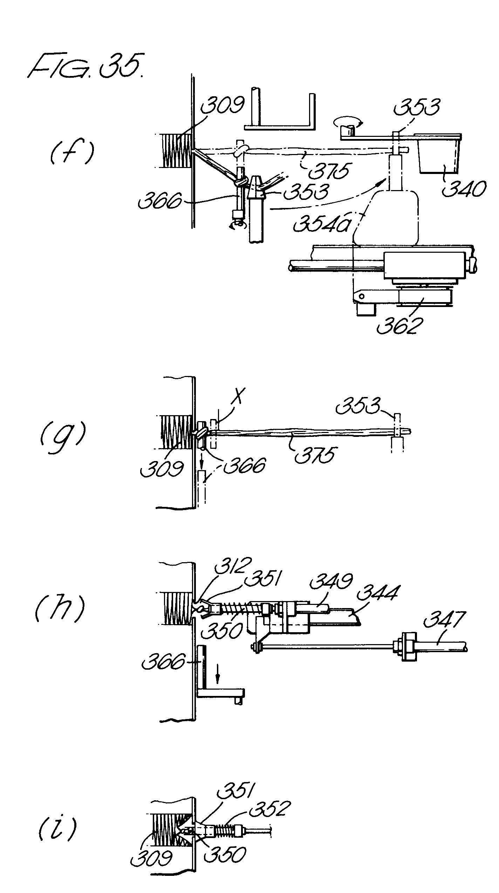

The jaw carriage 215a (Figure 4) swings through an arc away from the tray datum 232 to tighten the knot onto the roller 229, whilst the roller swings through an arc towards the tray to run the knot towards the tray under influence of piston 233. Timing of these motions is adjustable to obtain optimum performance from their relative motions. The jaw carriage 215a is mounted on another carriage 234 connected by a tensioning spring to a pneumatic cylinder 235 (Figures 4 and 5) but the spring is omitted for clarity. The piston of the cylinder 235 extends and the casing is tensioned by the spring force. This works in the same way as described later with reference to Figures 17 to 34.

The clamp and cut unit (Figures 14 to 16) is lowered into position. The roller 229 is now removed and the knot is tightened by the tensioning device. The length of casing from the knot to the jaws is severed by the knife 236 shown in Figure 14 adjacent to the knot. Tray clamping fingers (not shown) open. All the mechanisms return to their start position.

The knot is inserted as follows:

In front of the tray and slug is a hollow ring or plate connected to a pneumatic air supply. The ring has small angled holes in its internal diameter. The air emitting from the holes is focused on the centre line of the casing. The knotted length of casing is centralised and blown part way into the bore of the slug. The inserter 237 mounted on the central shaft between the gripper 211 (Figure 3) moves forward through the ring to insert the knot in the mouth of the slug similar to that shown in Figure 35i. The air blast centralises and partly inserts the knot, therefore there is no need for the conical end to the inserter on this particular version, as there is in a later described embodiment.

The mechanisms return to await the next slug.

An alternative embodiment of the machine is shown in Figures 17 to 36.

Figure 17 shows the units involved but it will be necessary to refer to other Figures to see the detail of the units since some of the detail is hidden in Figure 17 by one unit lying above another.

In Figure 17 there is on the left-hand side a casing tray 310 on which will lie a casing, the end of which is to be tied in a knot. The casing will lie with its longitudinal axis along the chain dotted line 311 and the casing tray is provided with tray clamping fingers by which the casing may be clamped after a portion of it has been pulled through into the knot tying machine.

The first unit which will be described is the gripper jaws and radius arm carriage unit. The gripper jaws are shown at 313 in Figure 17 and they are carried on a radius arm 314. Reference should now be made to Figures 18 to 21 which show the whole unit in more detail and may be read in conjunction with the top left hand part of Figure 17.

The unit is carried on a base 315 (Figure 21) which supports a guide rail 316 and also provides a support 317 for a gripper carriage piston and cylinder unit 318. The piston 318a is connected via a link 319 to the piston 320a of the second gripper carriage piston and cylinder unit 320. The cylinder 320 is mounted on a gripper carriage 321 which has four wheels 322 engageable with the track 316 to enable the carriage as a whole to move backwards and forwards as seen in Figure 18) from side to side as seen in Figure 17).

Attached to the carriage 321 is a unit which comprises a gripper radius arm auxiliary motor 323 and a gripper radius arm motor 324. The motors drive a shaft 325 to which is attached a radial arm 326 supporting the gripper radius arm 314. Each motor is variable from 0° to 180° of movement and two motors are used to provide the full extent of rotation needed. The gripper jaws 313 are operable by a pneumatic cylinder 327 (see Figure 21).

The machine incudes a clamp and clamp carriage and knife unit which will now be described with reference to Figures 17 and 31 to 34. Fixed to the base of the machine is an upstanding plate 328 (Figures 17 and 32) which carries a rail 329 on which run two pairs of wheels 330, the wheels being supported on a clamp carriage 331 so that the clamp carriage can move vertically up and down as seen in Figure 32. Up and down movement is controlled by a piston and cylinder arrangement 331a (Figures 17 and 34). The clamp carriage 331 supports a clamping and knife unit 332 (Figure 32). The unit 332 includes a movable jaw 333 forming part of a bell crank lever pivoted at 335 on a plate 335a and operable by a piston and cylinder unit 337. A fixed jaw 334 is attached to plate 335a. A knife 339 forms part of a two-armed lever pivoted at 336 and operable by piston and cylinder unit 338.

Another feature of the machine is a tube unit. A tube 340 (Figure 17) is carried by a radius arm 341 attached to a shaft 342 rotatable by a tube radius arm motor 343.

To insert a finished knot within the casing an inserter and carriage unit us provided and this is shown in Figure 17 and in Figures 22 to 24. A running rail 344 is provided on which run wheels 345 attached to an inserter carriage 346 which is movable by means of a piston and cylinder arrangement 347. To a flange 348 on the carriage 346 is attached a further piston and cylinder arrangement 349 adapted to move an inserter 350 axially relatively to the carriage. Around the inserter 350 is a conical guide 351 intended to pick up the end with a knot on it and to ensure that it is centralised on to the inserter 350 so that the inserter 350 can then insert the knot into the casing. Conical guide 351 is supported so as to run freely on the inserter 350 but is biased by a spring 352 towards the left hand end as seen in Figure 23.

The next unit to be described is the jaws and jaws carriage and casing tension unit illustrated in Figures 17 and 25 to 27. The jaws 353 are supported on a jaws cylinder 354 on a carriage 354a which is slidable laterally, as seen in Figure 17, on wheels 355, the wheels being supported by a plate 356 which itself is slidable transversely, as seen in Figure 17, on wheels 357 running along a rail 358. The jaws carriage 354a is driven by a piston 359 forming part of a piston and cylinder unit 360. A separate portion of the carriage 354b is supported on wheels 357a.

Tension is maintained on the casing by means of a casing tension unit 361 controlled by a tensator or constant force spring 362.

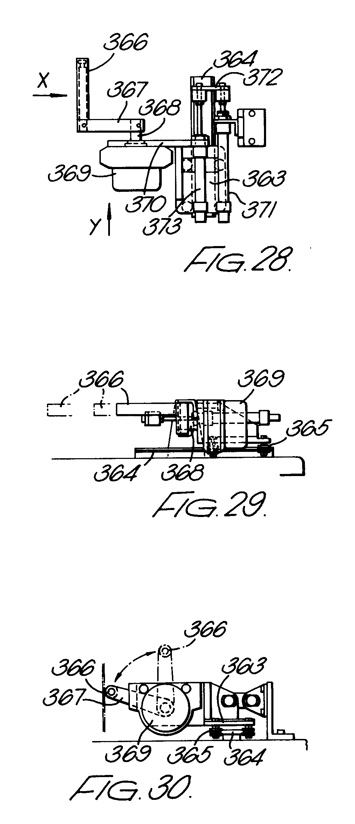

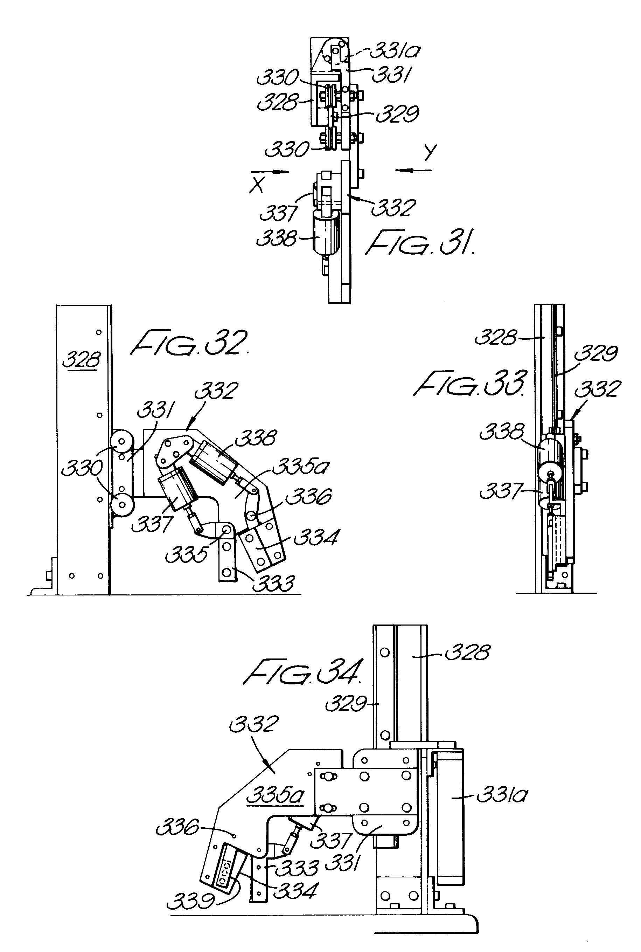

A further unit is provided for running the knot back towards the casing when it has been formed. This unit is illustrated in Figures 28 to 30 and in Figure 17. The unit is supported on a carriage 363 which is slidable on a rail 364 by virtue of wheels 365 (see Figure 30). The knot runner roller 366 is carried on an arm 367 attached to a shaft 368 driven by a motor 369. The motor is in turn supported on a plate 370 attached to the carriage 363. The carriage 363 is movable by piston and cylinder arrangement 371 linked via a link 372.

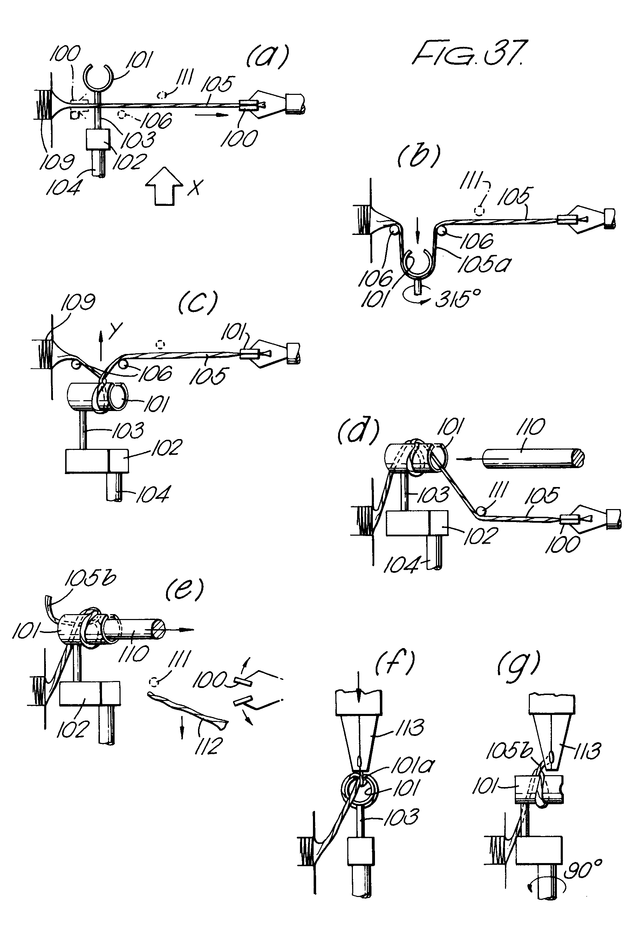

The way in which this machine operates to tie a knot in the end of a sausage casing is illustrated diagrammatically in Figures 35a to 35i and the sequence of operations is set out in the diagram Figure 36.

As seen in Figure 35a a casing 309 is shown with an end 308 which is to have a knot tied in it. Gripper jaws 313 are closed to grip the end 308 and then the shaft 325 is rotated so that the radius arm 314 moves from the position shown in firm line to the position shown at 314a in dotted line. This will cause the end of a casing 308 to be extended and a length of the casing 375 to be unshirred and pulled out of the casing tray. This length of casing 375 is used to tie the knot.

The tube 340 is now moved anti-clockwise by rotating shaft 342 and arm 341 so that the tube is moved to the position shown in Figure 35b in which a slot 340a in the tube is seen to be on the left hand side of the tube.

The gripper radius arm is now rotated anti-clockwise from the position shown in Figure 35b to the position shown in Figure 35c thus bringing the end of the extending casing portion 375 over the tube 340, the gripper radius arm being simultaneously moved in the direction of the arrow 376 in Figure 35c. The radius arm continues moving under the influence of the gripper auxillary motor 323, until the end of the radius arm with its gripper lies below the level of the part of the casing adjacent to the casing tray.

The gripper radius arm is now moved axially in the direction of the arrow 377 in Figure 35d so that the end 308 of the casing passes underneath the portion 375a of the extended casing 375. Radius arm 314 is not rotated in clockwise direction as indicated by arrow 378 until the arm assumes the position 314a as shown in dotted line to the right of Figure 35d.

At this stage the tray clamping fingers 312 are still open. The tray clamping fingers 312 are now closed and the jaws 353 are moved forward in the direction of the arrow 379 and are closed over a portion of the extending casing as seen in Figure 35e.

The knot running roller 366 is now moved by rotation of its arm 367 carried by shaft 368 in the direction of the arrow 380. The knot running roller is then moved forwardly in the direction of the arrow 379 until it enters the tube.

The jaws 353 are then retracted to the position shown in Figure 35f thus pulling the extended casing through a loop of casing to complete the knot, in a relatively loose, large form, the knot being tied over the knot running roller 366 as shown in Figure 35f. The tube 340 is now returned to the position shown in Figure 35f and the knot running roller 366 is moved forwardly until it occupies the chain dotted line position and then radially anticlockwise to the full line position show in Figure 35(g). At this time the jaws carriage is moved to the right as seen in Figure 35(f), the jaws continuing to grip the end of casing 375 and knot tension is maintained by spring 362. The knot running roller is then run along the length of the extended casing 375 so that the knot itself is carried towards the main part of the casing i.e. to the left as seen in Figure 35f, this being effected while maintaining the tension on the extending length of casing 375 by use of the constant force spring 362. This action not only runs the knot towards the casing but tightens and thus reduces the size of the knot.

As shown in Figure 35g the knot running roller 366 is now removed the knot being tightened by tension applied to the casing as the roller is removed. The clamp and cut unit is now moved into position 'X' so that the jaws bridge the casing and close and the cutter severs the casing adjacent the knot.

To insert the knotted end of the casing back inside the casing the tray clamping fingers 312 are opened and the inserter with a conical guide on it are brought up so that the conical guide picks up the knot and the inserter rod itself is moved forwardly so as to push the knot inside the casing, the conical guide being prevented from going into the casing by the fingers 312 thus reaching the position shown in Figure 35i.

Figure 36 sets out in full the sequence of operation of the various components of the machine showing the sequence from the moment the gripper jaws close at the beginning of the operation until the inserter has operated and the tray is indexed to bring in another casing. Units of time are shown along the top line and the series of operations are detailed on the right-hand side of Figure 36. The key on the left shows the meaning of the code letters used in the diagram.

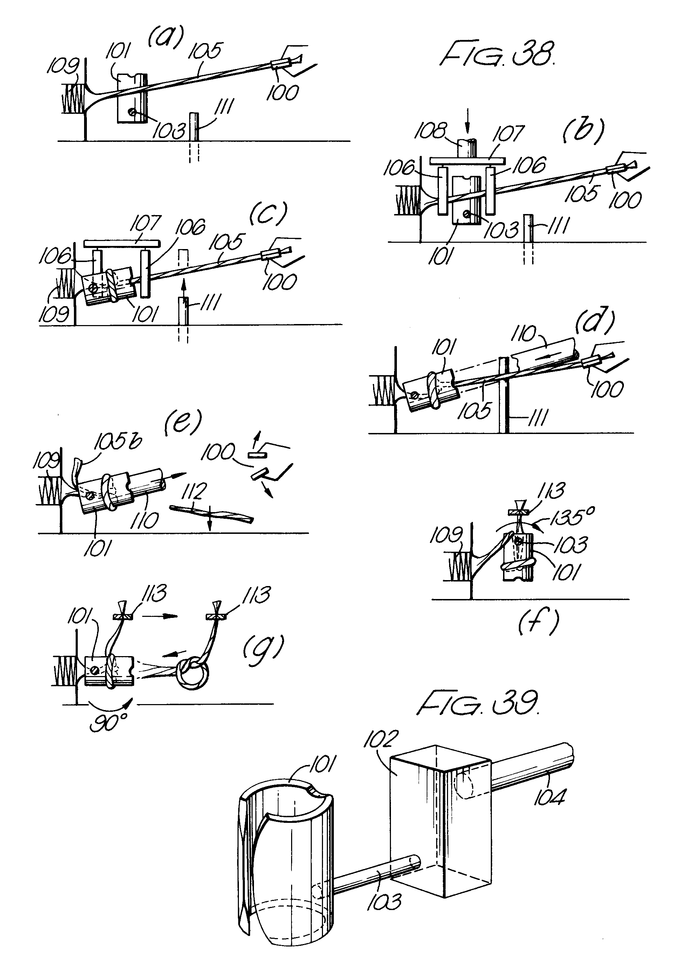

The alternative form of machine shown in Figures 37, 38 and 39 comprises a gripper device 100, a split tube 101 which is supported on a block 102 (see Figure 39) by arm 103. The block in turn is supported by a rotatable arm 104. It can be seen that when the arm 104 is rotated about its own longitudinal axis, the split tube, being offset (see especially Figure 39), rotates about a circle centred along the axis. This will become clear with reference to Figures 37 and 38 in the following description of the operation of the machine.

The machine also comprises two posts 106 supported by a bridge 107. The bridge is carried on a piston 108 of an air cylinder and piston arrangement.

Finally there is a restraint or stop member 111 which can be raised or lowered as shown in Figures 38b, c and d.

In use of this machine the end of a collagen casing 109 is withdrawn and twisted as shown in Figure 37 and 38 to form a twisted strand 105, held by the gripper 100 at one end. This strand 105 is set at an angle to the longitudinal axis of the tube 101 (see Figure 38a).

The next operation is to retract the split tube 101 from the position shown in Figure 37a to the position shown in Figures 37b and 38b. This causes the strand 105 to form a loop 105a as shown, the top ends of the loop being held against the posts 106.

The tube 101 is now rotated through 315 degrees to the position shown in Figures 37c and 38c causing the loop of the strand to be twisted into the position illustrated.

The split tube 101 is now moved forwardly in the direction of the arrow Y until it reaches the position shown in Figure 37d. At this point a tucker and cutter 110 is introduced, as shown in Figures 37d and 37e and 38d and 38e, the tucker and cutter being axially slid into the interior of the hollow tube, so as to sever the strand 105 and carry the end of the strand 105 to the position shown at 105b in Figure 37e.

The restraint 111 is raised from the position shown in Figure 38c to that shown in Figure 38d when the tucker and cutter 110 is entered into the tube 101 to hold the strand out of the way while the operation is carried out.

The jaws of the gripper 100 are then opened to release the cut-off portion 112 of the strand (Figures 37e, 38e).

The split tube is then rotated 135 degrees bringing the tail 105b into a position where it can be held by grippers 113 (see Figures 37f and 38f). The split tube is then rotated back through 90 degrees and the end 105 b held by grippers 113 is slid along the slit 101a in the split tube 101 so as to slide the knot off the tube as illustrated in Figure 37g and 38g.

## Claims

1.  A machine for tying a knot in a strand of material the machine comprising a first gripper means for gripping the free end of a strand of material and for extending it, a support shaped so that the extended strand can be wrapped thereabout, wrapping means for wrapping the strand round the support, and second gripper means for gripping the strand and pulling the tail of the strand through the wrapped-around portion so as to form a knot and cutting means for cutting the strand.

2.  A machine according to claim 1 and in which the first gripper means for gripping and extending the strand is also adapted to twist the strand.

3.  A machine according to either of claims 1 and 2 and in whch the support is in the form of a pair of jaws.

4.  A machine according to any preceding claim and in which the support is in the form of a tube.

5.  A machine according to claim 4 and in which the tube is a split tube.

6.  A machine according to claim 4 or claim 5 and in which the tube is carried on an arm so as to be rotatable about an axis to enable the tube to be brought into the plane of the extended strand.

7.  A machine according to any preceding claim and in which the second gripper means for gripping the strand comprises a pair of jaws.

8.  A machine according to any preceding claim and in which the wrapping means for wrapping the strand round the support comprises a pair of rollers carried by arms which are rotatable about an axis along which lies the first gripper means, or carried by a ring, with means to move the rollers towards and away from each other to grip and release the strand.

9.  A knot tying machine comprising:-
    gripper means to grip a free end of a strand of compressed material and to pull out a given length of the material;
    said gripper means being carried at one end of an arm the other end of which is pivoted for rotation about an axis;
    a tube carried on a pivoted arm and arranged so that it can be brought into the path of the pulled-out length of material;
    said gripper means being adapted to wrap the length of material round the tube until the length of material has crossed its own path, thus forming a loop,
    means to cause the gripper means to pass under said path; and
    jaws adapted to extend through said tube so as to close on the strand of material held by the gripper means and to pull the end of the strand back through the loop of material to form a knot;
    and means to cut the strand adjacent the knot.

10. A knot tying machine according to any of claims 1 to 9 in which a knot running roller is provided to receive the formed knot and to run the knot along the strand towards the bulk of the compressed material prior to cutting off the free end of the strand.

11. A knot tying machine according to claim 10 and in which insertion means are provided to insert the formed knot into the bulk of compresses material.

**12.** A knot tying machine according to claim 11 and in which the insertion means is surrounded by a conical or convergent shield which is spring-biassed and is adapted to gather up the knot and align it with the inserter.

**13.** A knot tying machine comprising:-

gripper means to grip and pull out a predetermined length of a strand of material from a compressed mass of the material;

a split tube carried by means which enable the tube to be rotated about an axis also to be moved along said axis whereby the tube may be placed on the extended strand, and rotated to form a loop;

tucker and cutter means adapted to sever the strand and push the free end of the strand through the split tube to form a knot; and

means to slide the formed knot off the split tube.

**14.** A knot tying machine according to claim 13 and in which the split tube is supported on a block rotatable about an offset axis and also moveable longitudinally of the axis.

**Revendications**

**1.** Une machine à confectionner des noeuds sur un brin de matériau, ladite machine comprenant un premier moyen de préhension pour agripper l'extrémité libre d'un brin de matériau et pour le tirer, un support ayant une forme appropriée pour permettre que le brin sous tension puisse s'enrouler autour dudit support, des moyens de formation de boucles permettant d'enrouler le brin autour dudit support, et un second moyen de préhension pour agripper le brin et tirer l'extrémité dudit brin au travers de la partie faisant une boucle de manière à confectionner un noeud et un moyen de cisaillement permettant de sectionner le brin.

**2.** Une machine selon la revendication 1. dans laquelle le premier moyen de préhension pour agripper et tirer le brin est aussi adapté pour torsader le brin.

**3.** Une machine selon la revendication 1. ou la revendication 2. et dans laquelle le support se présente sous la forme d'une paire de mâchoires.

**4.** Une machine selon n'importe laquelle des revendications précédentes et dans laquelle le support se présente sous la forme d'un tube.

**5.** Une machine selon la revendication 1. et dans laquelle le tube est un tube fendu.

**6.** Une machine selon la revendication 4. ou la revendication 5. et dans laquelle le tube est monté sur un bras de façon à pouvoir tourner autour d'un axe pour permettre audit tube d'être amené dans le plan du brin sous tension.

**7.** Une machine selon n'importe laquelle des revendications précédentes et dans laquelle le second moyen de préhension pour agripper le brin comporte une paire de mâchoires.

**8.** Une machine selon l'une quelconque des revendications précédentes dans laquelle le moyen de formation de boucle pour enrouler le brin autour du support comprend une paire de galets montés sur des bras pouvant pivoter autour de l'axe du premier moyen de préhension, ou qui sont montés sur une couronne, avec un moyen d'écarter ou de rapprocher les galets l'un de l'autre pour agripper et relâcher le brin.

**9.** Une machine à confectionner les noeuds comprenant:-

des moyens de préhension pour agripper une extrémité libre d'un brin de matériau comprimé et pour alimenter une longueur déterminée de cedit matériau;

ledit moyen de préhension étant monté à une extrémité d'un bras dont l'autre extrémité pivote pour permettre d'imprimer une rotation audit bras autour d'un axe;

un tube monté sur un bras pivotant et disposé de manière à ce qu'il puisse être amené sur la trajectoire suivie par la longueur de matériau alimentée;

ledit moyen de préhension étant adapté pour pouvoir faire faire une boucle à ladite longueur de matériau autour d'un tube jusqu'à ce que ladite longueur de matériau ait croisé sa propre trajectoire, pour clore ladite boucle,

un moyen permettant de faire passer le moyen de préhension en-dessous de ladite trajectoire; et

des mâchoires adaptées pour leur permettre de se projeter en-dessous dudit tube pour qu'elles puissent se refermer sur le brin de matériau maintenu agrippé par le moyen de préhension et pour tirer l'extrémité dudit brin vers l'arrière à l'intérieur et au-delà de ladite boucle de matériau pour confectionner un noeud;

et un moyen de sectionner le brin juste à la limite du noeud.

10. Une machine à confectionner les noeuds selon n'importe laquelle des revendications 1. à 9. dans laquelle un galet d'accompagnement du noeud est prévu, lequel galet reçoit le noeud après confection et déplace ledit noeud le long de la trajectoire du brin vers la masse de matériau d'alimentation comprimé, avant de sectionner l'extrémité libre dudit brin.

11. Une machine à confectionner les noeuds selon la revendication 10. et dans laquelle un moyen d'insertion a été prévu, lequel moyen permet d'insérer le noeud confectionné à l'intérieur de l'enveloppe constituant la masse de matériau d'alimentation comprimé.

12. Une machine à confectionner les noeuds selon la revendication 11. et dans laquelle le moyen d'insertion comporte sur son pourtour un bouclier conique ou dont tous les points de la surface sont convergents chargé par un ressort et adapté pour permettre d'intercepter le noeud et ensuite de le mettre en alignement par rapport à l'embout d'insertion.

13. Une machine à confectionner les noeuds comprenant:-
    un moyen de préhension pour agripper et alimenter une longueur prédéterminée de brin de matériau à partir d'une masse comprimée de matériau d'alimentation,
    un tube fendu monté sur un moyen permettant de faire tourner le tube autour d'un axe et aussi de le déplacer le long dudit axe pour que le tube puisse être placé sur le brin sous tension et mis en mouvement rotatif pour former une boucle;
    un moyen "refouleur-cisailleur" adapté de façon à permettre de sectionner le brin et de pousser l'extrémité libre du brin à l'intérieur du tube fendu pour confectionner un noeud; et
    un moyen permettant d'extraire par glissement le noeud hors du tube fendu.

14. Une machine à confectionner les noeuds selon la revendication 13. et dans laquelle le tube fendu est monté sur un bloc rotatif autour d'un axe décalé par rapport à l'axe dudit bloc et qui peut aussi se déplacer longitudinalement par rapport à l'axe dudit bloc.

**Patentansprüche**

1. Maschine zum Festziehen eines Knotens in einem Materialstrang, wobei die Maschine aus einer ersten Greifvorrichtung zum Ergreifen des freien Endes eines Materialstrangs und zum Dehnen desselben besteht, aus einem Support, der so geformt ist, daß der gestreckte Strang darum herumgewickelt werden kann, aus einer Wickelvorrichtung zum Wickeln des Stranges um den Support, und aus einer zweiten Greifvorrichtung zum Ergreifen des Stranges und zum Ziehen des Strangendes durch den herumgewickelten Teil zur Bildung eines Knotens und aus einer Schneidvorrichtung zum Durchtrennen des Stranges.

2. Maschine nach Anspruch 1, bei der die erste Greifvorrichtung zum Ergreifen und Strecken des Stranges auch dazu geeignet ist, den Strang zu verdrillen.

3. Maschine nach einem der Ansprüche 1 und 2, bei der der Support in Form eines Backenpaares vorliegt.

4. Maschine nach einem vorhergehenden Anspruch, bei der der Support die Form eines Rohres hat.

5. Maschine nach Anspruch 4, bei der das Rohr ein Schlitzrohr ist.

6. Maschine nach Anspruch 4 oder 5, bei der das Rohr auf einem Arm getragen wird, so daß es um eine Achse drehbar ist, damit das Rohr in die Ebene des gestreckten Stranges gebracht werden kann.

7. Maschine nach einem vorhergehenden Anspruch, bei der die zweite Greifvorrichtung zum Ergreifen des Stranges aus einem Paar Backen besteht.

8. Maschinen nach einem vorhergehenden Anspruch, bei der die Wickelvorrichtung zum Wickeln des Stranges um den Support ein Paar Rollen umfaßt, das von Armen getragen wird, welche um eine Achse drehbar sind, entlang welcher die erste Greifvorrichtung liegt, oder welches von einem Ring mit einer Vorrichtung für das Aufeinanderzu- und Voneinanderwegbewegen der Rollen getragen wird, um den Strang zu ergreifen und freizugeben.

9. Knoter, bestehend aus:
    einer Greifvorrichtung zum Ergreifen eines freien Endes eines Stranges aus komprimiertem Material und zum Herausziehen einer gegebenen Länge des Materials;
    wobei die Greifvorrichtung an einem Ende eines Armes getragen wird, dessen anderes Ende um eine Achse im Drehsinn schwenkbar ist;
    einem Rohr, das auf einem verschwenkten Arm getragen wird und so angeordnet ist, daß es in die Bewegungsbahn der herausgezogenen Materiallänge gebracht werden kann;

wobei die Greifvorrichtung die Materiallänge rund um das Rohr wickeln kann, bis die Materiallänge ihre eigene Bewegungsbahn gekreuzt hat und auf diese Weise eine Schleife bildet;

einer Vorrichtung, mittels welcher die Greifvorrichtung unter die genannte Bewegungsbahn bewegbar ist; und

Backen, die sich durch das Rohr hindurch erstrecken können, damit sie sich auf dem Materialstrang schliessen, der von der Greifvorrichtung gehalten wird, und das Ende des Stranges durch die Schleife des Materials zurückzuziehen, um einen Knoten zu bilden;

und einer Vorrichtung zum Durchtrennen des Stranges in der Nähe des Knotens.

10. Knoter nach einem der Ansprüche 1 bis 9, bei dem eine Knotenlaufrolle vorgesehen ist, um den gebildeten Knoten aufzunehmen und den Knoten entlang des Stranges zu der Hauptmasse des komprimierten Materials laufen zu lassen, bevor das freie Ende des Stranges abgetrennt wird.

11. Knoter nach Anspruch 10, bei der eine Einsetzvorrichtung vorgesehen ist, um den gebildeten Knoten in die Hauptmasse des komprimierten Materials einzusetzen.

12. Knoter nach Anspruch 11, bei dem die Einsetzvorrichtung von einem konischen oder konvergierenden Schild umgeben ist, der durch eine Feder vorgespannt ist und den Knoten aufnehmen und gegenüber der Einsetzvorrichtung ausrichten kann.

13. Knoter, bestehend aus:

einer Greifvorrichtung zum Ergreifen und Herausziehen einer vorbestimmten Länge eines Materialstranges aus einer komprimierten Masse des Materials;

einem Schlitzrohr, das von einer Vorrichtung getragen wird, mittels welcher das Rohr um eine Achse drehbar und entlang dieser Achse bewegbar ist, wodurch das Rohr auf dem gedehnten Strang plaziert und zur Bildung einer Schleife gedreht werden kann;

einer Steck- und Schneidvorrichtung, die zum Durchtrennen des Stranges und zum Hindurchdrücken des freien Endes des Stranges durch das Schlitzrohr zur Bildung eines Knotens dient; und

einer Vorrichtung zum Abschieben des gebildeten Knotens von dem Schlitzrohr.

14. Knoter nach Anspruch 13, bei dem das Schlitzrohr auf einem Block abgestützt ist, der um eine versetzte Achse drehbar und außerdem in Längsrichtung der Achse bewegbar ist.

FIG. 1  (a)  (b)  (c)

FIG. 2.  (a)  (b)  (c)

EP 0 294 180 B1

FIG. 1. (d)　　　　　　(e)　　　　　　　(f)　　　　　　(g)

FIG. 2. (d)　　　　　　(e)　　　　　　　(f)

EP 0 294 180 B1

FIG.3

EP 0 294 180 B1

FIG.4.

233
234
215a
232
215
217
235
211
215
211

FIG.5.

233
234
215a

FIG.6.

FIG.7.

FIG.8.

FIG. 9.

FIG. 10.

FIG. 11.

231

FIG. 12.

217

231

215

219

211

FIG. 13.

231

FIG. 14.

FIG. 15.

FIG. 16.

236

FIG. 17

FIG. 18.

FIG. 19.

FIG. 20.

FIG. 21.

FIG. 22.

FIG. 24.

FIG. 23.

FIG. 25.

FIG. 26.

FIG. 27.

FIG.28.

FIG.29.

FIG.30.

FIG. 31.

FIG. 32.

FIG. 33.

FIG. 34.

FIG.35.

(a)

(b)

(c)

(d)

(e)

FIG. 35.

(f)

(g)

(h)

(i)

*FIG.36*

UNITS OF TIME  0 1 2 3 4 5 6 7 8 9 10 11 12 13 14 15 16 17 18

| Label | Markings |
|---|---|
| GRIPPER JAWS | C ... O |
| GRIPPER RADIUS-ARM 'MOTOR' | CW ACW CW ... ACW |
| TUBE RADIUS-ARM MOTOR' | ACW CW |
| GRIPPER CARRIAGE PISTON 1. | FWD RTN. |
| GRIPPER RAD-ARM AUX.'MOTOR' | ACW CW |
| GRIPPER CARRIAGE PISTON 2. | BACK FWD |
| JAWS CARRIAGE PISTON | FWD RTN. FWD RTN. |
| JAWS | C O |
| KNOT-RUNNER ROLLER 'MOTOR' | CW ACW |
| KNOT-RUNNER CARR. PISTON 1. | FWD RTN. |
| KNOT-RUNNER CARR. PISTON 2. | FWD. RTN. |
| CASING TENSION UNIT | C FWD O C RTN. |
| TRAY CLAMPING FINGERS | DWN. UP |
| CLAMP CARRIAGE | C O |
| CLAMP | C O |
| CUT | |
| INSERTER CARRIAGE | FWD RTN. |
| INSERTER | FWD RTN. |
| TRAY INDEX | O C |

KEY:

C = Closed

O = Open

CW = Clockwise

ACW = Anti-Clockwise

FWD = Forward

RTN = Return

26

FIG. 37.

EP 0 294 180 B1

FIG. 38.

FIG. 39.

28